# EUROPÄISCHE PATENTSCHRIFT

(11) **EP 4 470 823 B1**
(45) Veröffentlichungstag und Bekanntmachung des Hinweises auf die Patenterteilung: **12.11.2025**
(21) Anmeldenummer: 24178905.6
(22) Anmeldetag: 29.05.2024
(51) Int. Cl.: B60L 53/14, B60L 53/16, B60L 53/36, B63J 3/04

(54) **ENERGIEÜBERTRAGUNGSSYSTEM**
ENERGY TRANSFER SYSTEM
SYSTÈME DE TRANSMISSION D'ÉNERGIE

(30) Priorität: 02.06.2023 DE 102023114592
(43) Veröffentlichungstag der Anmeldung: 04.12.2024
(73) Patentinhaber: Stemmann-Technik GmbH, 48465 Schüttorf (DE)
(72) Erfinder: Elskamp, Julian, 48465 Schüttorf (DE)
(74) Vertreter: Griepenstroh, Jörg

(56) Entgegenhaltungen:
- EP-A1- 3 862 213
- EP-B1- 3 408 131
- CN-A- 103 607 017
- CN-A- 110 562 401
- CN-A- 113 561 808

## Beschreibung

Die Erfindung betrifft ein Energieübertragungssystem gemäß den Merkmalen des Patentanspruches 1.

Die US 3 604 381 A offenbart ein Energieübertragungssystem für Wasserfahrzeuge, bei welchem sich an Bord des Wasserfahrzeuges ein Kabel befindet, das über angetriebene Rollen aus- und eingefahren werden kann, um das Wasserfahrzeug mit Landstrom zu versorgen. Die Steckverbindung mit der Landstromversorgung muss manuell hergestellt werden.

Die DE 10 2019 214 552 A1 offenbart eine Ladestation zum Aufladen eines elektrischen Energiespeichers eines Straßenfahrzeuges, das eine zweiteilige Oberleitungsanlage mit einem Stromabnehmer mit mindestens einer anheb- und absenkbaren Schleifleiste je Kontaktpol aufweist. Die Ladestation umfasst je Kontaktpol mindestens zwei Ladekontakte, welche Oberhalb einer Ladeposition für das Straßenfahrzeug und derart nebeneinander angeordnet sind, dass je Kontaktpol mindestens zwei Kontaktstellen zwischen Schleifleiste und Ladekontakten herstellbar sind. Hierdurch können höhere Ladeströme übertragen werden, was die Ladezeit für den Energiespeicher verkürzt.

Die CN 110 562 401 A offenbart ein Energieübertragungssystem zur Versorgung eines Wasserfahrzeugs von Land mit einer vertikalen am Wasserfahrzeug verlaufenden Kontaktleiste.

Wasserfahrzeuge, wie z.B. Fähren, werden mit Landstrom versorgt, nachdem sie angelegt haben. Hierbei müssen Relativbewegungen zwischen der landseitigen und der wasserseitigen Einheit ausgeglichen werden, damit die Landstromversorgung nicht beschädigt wird. Hierzu ist in der Regel ein System passiv ausgebildet und das andere System aktiv, in dem Sinne, dass es beweglich ist und die Relativbewegungen ausgleichen kann. Zudem besteht der Wunsch, Systeme einfach koppeln zu können, am besten ohne komplizierte Steckverbindungen. Derartige Verbindungen sollen sich schnell herstellen lassen und genauso schnell wieder trennen lassen. Diese Energieübertragungssysteme sollen robust sein, eine geringe Baugröße haben und gleichzeitig hohe Ströme übertragen können.

Der Erfindung liegt die Aufgabe zugrunde, ein Energieübertragungssystem aufzuzeigen, das diese Anforderungen erfüllt.

Die Erfindung löst diese Aufgabe durch ein Energieübertragungssystem mit den Merkmalen des Patentanspruches 1.

Die Unteransprüche betreffen vorteilhafte Weiterbildungen der Erfindung.

Das erfindungsgemäße Energieübertragungssystem für ein Wasserfahrzeug sieht vor, dass an dem Wasserfahrzeug vertikal verlaufende Stromschienen angeordnet sind, wobei an Land ein aktives Kontaktierungssystem angeordnet ist. Das Wasserfahrzeug mit seinen vertikal, d.h. senkrecht zur Wasseroberfläche, verlaufenden Stromschienen ist das passive System des Energieübertragungssystems. Es wird über ein aktives Kontaktierungssystem vom Land her kontaktiert. Hierzu besitzt das landseitige Kontaktierungssystem einen verlagerbaren Arm und am Ende des Arms eine vom Land horizontal gegen die Stromschienen drückbare Kontakteinheit. Die Bewegung des Arms wird über eine angetriebene Mechanik realisiert, die sicherstellt, dass eine konstante Kontaktkraft zwischen der Kontakteinheit und der Stromschiene aufgebaut wird. Die Kontakteinheit weist erfindungsgemäß mehrere in Längsrichtung der Stromschienen aufeinander folgende Kontaktkörper auf, die in Anpressrichtung auf die Stromschienen unabhängig voneinander nachgiebig gelagert sind.

Die mehreren Kontaktkörper gehören zu denselben stromführenden Leiter. Weil je stromführenden Leiter mehrere übereinander angeordnete Kontaktflächen der einzelnen Kontaktkörper zur Verfügung stehen, passt sich die Kontaktfläche insgesamt wesentlich besser an die Stromschiene an. Die Kontaktflächen bzw. Kontaktkörper sind hierzu unabhängig voneinander nachgiebig gelagert und können daher separat zurückweichen, wenn eine bestimmte Rückstellkraft der Kontaktkörper überschritten wird. Sie richten sich einzeln an der schiffsseitigen Stromschiene aus, so dass es insgesamt mehr Kontaktpunkte gibt als bei einer einstückig ausgeführten Kontaktfläche gleicher Größe. Aufgrund der höheren Anzahl der Kontaktpunkte kann bei gleicher Baugröße mehr Strom übertragen werden.

Das erfindungsgemäße Energieübertragungssystem berücksichtigt, dass die Kontaktflächen zwischen den Stromschienen und einer Kontakteinheit fertigungsbedingt und auch durch Abnutzung, d.h. betriebsbedingt eine gewisse makroskopische Unebenheit haben. Die Fläche der Kontakteinheit weist daher drei Punkte auf, über die es statisch stabil gegen die Stromschiene gedrückt wird. Mithin gibt es zwischen zwei einander berührenden land- und wasserseitigen Kontaktflächen stets drei Kontaktpunkte. Über diese drei Kontaktpunkte fließt der gesamte Strom. Bei der Erfindung ist die landseitige Kontaktfläche in einzelne Kontaktkörper mit jeweils einer kleineren Teilkontaktfläche unterteilt, wobei jeder einzelne Kontaktkörper nachgiebig gelagert ist, so dass jeder einzelne Kontaktkörper mit seiner Teilkontaktfläche drei Kontaktpunkte aufweist. Dadurch kann bei gleicher Baugröße der gesamten Kontaktfläche eine größere Strommenge übertragen, ohne dass die zulässige Stromdichte im Werkstoff der Kontaktkörper überschritten wird.

Der Begriff "landseitig" umfasst Anlagen, die der Landseite zugeordnet sind, , d.h. an Land angeordnet sind, einschließlich an Land befestigter schwimmender Anlagen, wie z.B. ein schwimmender Pier oder eine schwimmende Versorgungseinheit.

In vorteilhafter Weiterbildung der Erfindung sind alle Kontaktkörper identisch konfiguriert. Sie definieren eine gemeinsame Kontaktfläche, insbesondere in einer gemeinsamen Ebene, aus welcher sie beim Kontakt mit der Stromschiene unabhängig voneinander verschiebbar sind, um sich jeweils in eine statisch stabile 3-Punkt-Berührung zu bringen. Die Kontaktkörper erstrecken sich quer zur Längsrichtung der Stromschiene und sind vorzugsweise auch breiter als die Stromschiene. Die vertikal verlaufende Stromschiene gleicht Schwankungen in Vertikalrichtung, beispielsweise beim Beladen einer Fähre, aus oder auch durch den Tidenhub. Die Anpresskraft wird durch die Mechanik des verlagerbaren Arms sichergestellt und aufrecht gehalten. Die einzelnen Kontaktkörper müssen für die sichere Anlage lediglich wenige Zentimeter, bevorzugt weniger als 30 mm, verschieben können, um statisch stabil und damit kontaktsicher an der Stromschiene anzuliegen.

Vorzugsweise sind je stromführenden Leiter mindestens drei Kontaktkörper übereinander angeordnet. Vorzugsweise sind je stromführenden Leiter fünf Kontaktkörper vorgesehen. Für den Neutralleiter PE reicht die Hälfte der Anzahl der Kontaktkörper der Leiter P1, P2 aus. Bei einer ungeraden Anzahl von z.B. fünf Kontaktkörpern je Leiter werden drei Kontaktkörper für den Neutralleiter eingesetzt, d.h. die Anzahl der Kontaktkörper für den Neutralleiter wird aufgerundet.

Der Arm mit der endseitig angeordneten Kontakteinheit besitzt vorzugsweise eine kardanische Lagerung, über welcher die Kontakteinheit gehalten ist. Die kardanische Lagerung gleicht ein Rollen des Wasserfahrzeuges um seine Längsachse aus. Die einzelnen Kontaktkörper müssen innerhalb der Kontakteinheit nicht mehr kardanisch gelagert sein. Vorzugsweise sind sie nur noch in eine einzige gemeinsame Richtung verlagerbar, d.h. lediglich in Anpressrichtung verlagerbar. Alle Kontaktkörper sind parallel zueinander verlagerbar. In praktischer Ausgestaltung sind die Kontaktkörper an ihren Rückseiten über Befestigungsbolzen mit einem Gegenstück der Kontakteinheit verbunden. Diese Verbindung ist translatorisch, wobei die Befestigungsbolzen fest mit dem Kontaktkörper verbunden sind und sich gegenüber dem Gegenstück verschieben können. Für die Rückstellung ist vorgesehen, dass zwischen den Rückseiten der Kontaktkörper und der Kontakteinheit jeweils eine Rückstellkraft wirkt. Die Rückstellkraft wird bevorzugt von Federelementen erzeugt, insbesondere von einer oder mehreren Druckfedern. Die Federelemente können zwischen den Rückseiten der Kontaktkörper und der Kontakteinheit angeordnet sein. Da die Kontaktkörper bevorzugt eine deutlich größere Breite haben als die Stromschienen, ist vorgesehen, dass die einzelnen Kontaktkörper über mindestens zwei im Abstand zueinander angeordnete Befestigungsbolzen innerhalb der Kontakteinheit geführt werden. Um Klemmungen zu vermeiden, ist vorgesehen, dass die Befestigungsbolzen vorzugsweise in Führungshülsen der Kontakteinheit geführt sind. Zweckmäßig ist es zudem, mehrere Federelemente zwischen dem Kontaktkörper und dem Gegenstück anzuordnen. Günstig sind zwei Federelemente, die vorzugsweise benachbart der Befestigungsbolzen angeordnet sein sollten. Insbesondere durchsetzen die Befestigungsbolzen die Federelemente. Dadurch werden die Federelemente gehalten und geführt. Die Führungshülse für die Befestigungsbolzen dient gleichzeitig auch zur Zentrierung der Federelemente.

Das erfindungsgemäße Energieübertragungssystem hat den Vorteil, dass auf aufwendige Steckverbindungen verzichtet werden kann. Das passive schiffsseitige System mit den Stromschienen ist vorzugsweise in die Struktur des Schiffes integriert. Das aktive, landseitige System dient neben der Kontaktierung gleichzeitig zum Kabelmanagement und stellt eine Mehrkontaktflächenschnittstelle zur Stromübertragung zwischen Land und Schiff dar. Zum Schutz vor äußeren Einflüssen kann landseitig eine Einhausung vorgesehen sein, in welche der verlagerbare Arm bei Nichtgebrauch zurückgezogen werden kann. Die Einhausung kann eine verschließbare Öffnung aufweisen, die geöffnet wird, wenn der Arm ausgefahren wird. Die Öffnung kann z.B. mit einem Rolltor verschlossen werden.

Das erfindungsgemäße Energieübertragungssystem besitzt einen einfachen, ausgesprochen robusten Aufbau. Die Verlagerbarkeit der einzelnen Kontaktkörper gewährleistet, dass es zu einer Dreipunkt-Berührung je Kontaktkörper kommt, so dass die zulässige Stromdichte in den verwendeten Werkstoffen keinesfalls überschritten wird. Es kann bei gleicher oder geringerer Baugröße mehr Strom über dieselbe Kontaktfläche übertragen werden. Die Lage der Teilkontaktflächen passt sich auch bei einem sich leicht bewegenden Wasserfahrzeug automatisch an.

Die Erfindung wird nachfolgend anhand eines Ausführungsbeispiels näher erläutert.

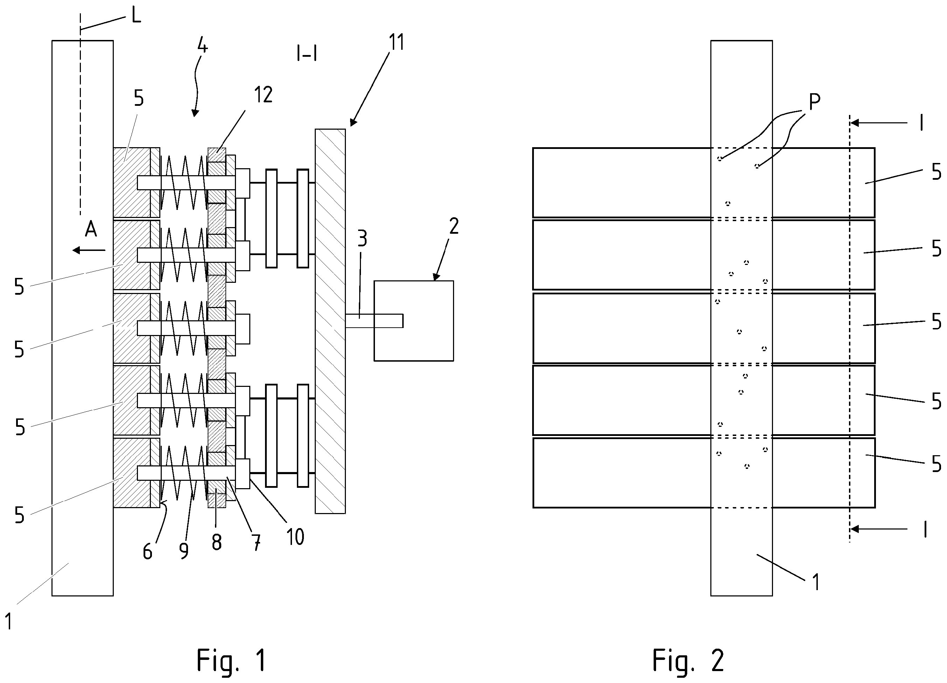

Die Figur 1 zeigt eine vertikal verlaufenden Stromschiene 1, die an einem nicht näher dargestellten Wasserfahrzeug befestigt ist. Landseitig befindet sich ein aktives Kontaktierungssystem 2 mit einem rein schematisch angedeuteten verlagerbaren Arm 3, an dessen zur Stromschiene 1 weisenden Ende eine Kontakteinheit 4 angeordnet ist. Die Kontakteinheit 4 besitzt mehrere in Längsrichtung L der Stromschiene 1, d.h. in Vertikalrichtung, übereinander angeordnete Kontaktkörper 5. Alle Kontaktkörper 5 sind identisch konfiguriert. Sie definieren gemeinsam eine landseitige Kontaktfläche des Energieübertragungssystems 11. Sie besitzen einen quaderförmigen Querschnitt und besitzen eine wesentlich größere Breite als die schmale Stromschiene 1. Figur 2 zeigt die Größenverhältnisse andeutungsweise.

Der Arm 3 ist dazu ausgebildet, die Kontakteinheit 4 unter einer definierten Anpresskraft gegen die Stromschiene 1 zu drücken. Es kann sich dabei um ein mehrphasiges System handeln, insbesondere handelt es sich um ein dreiphasiges System. Die Kontakteinheit 4 besitzt dann drei Gruppen der dargestellten unabhängig voneinander verlagerbaren Kontaktkörper 5, wobei die drei Gruppen elektrisch gegeneinander isoliert sind.

Die Kontaktkörper 5 besitzen Rückseiten 6, in die Befestigungsbolzen 7 eingesetzt sind. Es handelt sich insbesondere um Schraubbolzen. Die Befestigungsbolzen 7 sind in Führungshülsen 8 der Kontakteinheit 4 linear geführt. Jeder der Kontaktkörper 5 kann daher unabhängig von den anderen Kontaktkörpern 5 entgegen der Anpressrichtung A beim Anpressen an die Stromschiene durch eine translatorische Bewegung zurückweichen. Die Anpressrichtung A steht senkrecht zur Stromschiene 1, weil die Kontakteinheit 4 gegenüber dem Arm 3 kardanisch gelagert ist. Eine vom Arm 3 auf die Kontakteinheit 4 übertragene Kraft ist gegen die Stromschiene gerichtet, muss durch die kardanische Lagerung hinsichtlich der Kraftrichtung nachträglich jedoch nicht mehr korrigiert werden.

Die Rückstellung der Kontaktkörper 5 in ihre dargestellte Ausgangslage, d.h. wenn sie nicht gegen die Stromschiene 1 gedrückt werden, erfolgt über Federelemente 9, die zwischen den Rückseiten 6 der Kontaktkörper 5 und einem Gegenstück 12 der Kontakteinheit 4 wirksam bzw. angeordnet sind. Die Befestigungsbolzen 7 durchsetzen die Federelemente 9 in Längsrichtung. In nicht näher dargestellter Weise ist jeder Kontaktkörper 5 durch zwei Befestigungsbolzen 7 gehalten. Die Befestigungsbolzen 7 besitzen jeweils einen verbreiterten Kopf 10, durch welche die einzelnen Kontaktkörper 5 unter dem Einfluss der Federkraft an dem Gegenstück 12 gehalten sind und stets im unbelasteten Zustand in die dargestellte Ausgangsposition gedrückt werden. Im belasteten Zustand federn die einzelnen Kontaktkörper 5 individuell ein. Dadurch ergeben sich deutlich mehr Kontaktpunkte P, wie rein beispielshaft in der Figur 2 angedeutet ist. Bei theoretisch drei Kontaktpunkten P je Kontaktkörper 5 ergeben sich fünfzehn Kontaktpunkte P für die gesamte dargestellte Kontaktfläche, so dass größere Ströme übertragen werden können, ohne dass die maximale Stromdichte der verwendeten Werkstoffe überschritten wird.

### Bezugszeichen:

- 1 -: Stromschiene
- 2-: Kontaktierungssystem
- 3-: Arm
- 4-: Kontakteinheit
- 5-: Kontaktkörper
- 6-: Rückseite
- 7-: Befestigungsbolzen
- 8-: Führungshülse
- 9-: Federelement
- 10-: Kopf
- 11 -: Energieübertragungssystem
- 12-: Gegenstück

- A -: Anpressrichtung
- L -: Längsrichtung von 1
- P -: Kontaktpunkt

## Patentansprüche

1. Energieübertragungssystem (11) für ein Wasserfahrzeug, **dadurch gekennzeichnet, dass** an dem Wasserfahrzeug vertikal verlaufende Stromschienen (1) angeordnet sind, wobei an Land ein aktives Kontaktierungssystem (2) angeordnet ist, das einen verlagerbaren Arm (3) und am Ende des Arms (3) eine von Land horizontal gegen die Stromschienen (1) drückbare Kontakteinheit (4) aufweist, wobei die Kontakteinheit (4) mehrere in Längsrichtung (L) der Stromschienen (1) aufeinander folgende Kontaktkörper (5) aufweist, die in Anpressrichtung (A) auf die Stromschienen (L) unabhängig voneinander nachgiebig gelagert sind.

2. Energieübertragungssystem (11) nach Anspruch 1, **dadurch gekennzeichnet, dass** alle Kontaktkörper (5) identisch konfiguriert sind und eine gemeinsame Kontaktfläche definieren, aus welcher sie beim Kontakt mit der Stromschiene (1) unabhängig voneinander verschiebbar sind.

3. Energieübertragungssystem (11) nach Anspruch 1 oder 2, **dadurch gekennzeichnet, dass** die Kontaktkörper (5) sich quer zur Längsrichtung (L) der Stromschiene (1) erstrecken, wobei die Kontaktkörper (5) breiter sind als die Stromschiene (1).

4. Energieübertragungssystem (11) nach einem der Ansprüche 1 bis 3, **dadurch gekennzeichnet, dass** je stromführenden Leiter mindestens drei Kontaktkörper (5) übereinander angeordnet sind.

5. Energieübertragungssystem (11) nach einem der Ansprüche 1 bis 4, **dadurch gekennzeichnet, dass** die Kontaktkörper (5) innerhalb der Kontakteinheit (4) in eine einzige Richtung verlagerbar sind.

6. Energieübertragungssystem (11) nach einem der Ansprüche 1 bis 5, **dadurch gekennzeichnet, dass** die Kontaktkörper (5) an ihren Rückseiten (6) über Befestigungsbolzen (7) mit der Kontakteinheit (4) verbunden sind, wobei zwischen den Rückseiten (6) und einem Gegenstück (12) der Kontakteinheit (4) Federelemente (9) angeordnet sind.

7. Energieübertragungssystem (11) nach Anspruch 6, **dadurch gekennzeichnet, dass** die Befestigungsbolzen (7) in Führungshülsen (8) der Kontakteinheit (4) geführt sind.

8. Energieübertragungssystem (11) nach Anspruch 6 oder 7, **dadurch gekennzeichnet, dass** jeder Kontaktkörper (5) über mindestens zwei Federelemente (9) am Gegenstück (12) der Kontakteinheit (4) abgestützt ist.

9. Energieübertragungssystem (11) nach einem der Ansprüche 6 bis 8, **dadurch gekennzeichnet, dass** die Befestigungsbolzen (7) die Federelemente (9) durchsetzen.

## Claims

1. An energy transfer system (11) for a watercraft, **characterized in that** vertically extending busbars (1) are disposed on the watercraft, wherein an active contact system (2) is disposed on land, which has a displaceable arm (3) and at the end of the arm (3) a contact unit (4) which can be pressed horizontally against the busbars (1) from land, wherein the contact unit (4) has a plurality of contact bodies (5) following one another in the longitudinal direction (L) of the busbars (1), which contact bodies are resiliently mounted independently of one another in the pressing direction (A) on the busbars (L).

2. The energy transfer system (11) according to claim 1, **characterized in that** all contact bodies (5) are configured identically and define a common contact surface from which they can be displaced independently of one another upon contact with the busbar (1).

3. The energy transfer system (11) according to claim 1 or 2, **characterized in that** the contact bodies (5) extend transversely to the longitudinal direction (L) of the busbar (1), wherein the contact bodies (5) are wider than the busbar (1).

4. The energy transfer system (11) according to any one of claims 1 to 3, **characterized in that** at least three contact bodies (5) are disposed one above the other for each current-carrying conductor.

5. The energy transfer system (11) according to any one of claims 1 to 4, **characterized in that** the contact bodies (5) are displaceable in a single direction within the contact unit (4).

6. The energy transfer system (11) according to any one of claims 1 to 5, **characterized in that** the contact bodies (5) are connected to the contact unit (4) at their rear sides (6) via fastening bolts (7), wherein spring elements (9) are disposed between the rear sides (6) and a counterpart (12) of the contact unit (4).

7. The energy transfer system (11) according to claim 6, **characterized in that** the fastening bolts (7) are guided in guide sleeves (8) of the contact unit (4).

8. The energy transfer system (11) according to claim 6 or 7, **characterized in that** each contact body (5) is supported on the counterpart (12) of the contact unit (4) via at least two spring elements (9).

9. The energy transfer system (11) according to any one of claims 6 to 8, **characterized in that** the fastening bolts (7) pass through the spring elements (9).

## Revendications

1. Système de transmission d'énergie (11) pour un engin nautique, **caractérisé en ce que** sont disposées des barres omnibus (1) s'étendant verticalement sur l'engin nautique, dans lequel un système de contact actif (2) est disposé à terre, lequel présente un bras (3) déplaçable et, sur l'extrémité du bras (3), une unité de contact (4) pouvant être pressée horizontalement contre les barres omnibus (1) depuis la terre, dans lequel l'unité de contact (4) présente plusieurs corps de contact (5) se suivant dans le sens longitudinal (L) des barres omnibus (1), qui sont montés de manière flexible indépendamment les uns des autres dans le sens de pression (A) sur les barres omnibus (L).

2. Système de transmission d'énergie (11) selon la revendication 1, **caractérisé en ce que** tous les corps de contact (5) sont configurés de manière identique et définissent une surface de contact commune à partir de laquelle ils peuvent être coulissés indépendamment les uns des autres lors du contact avec la barre omnibus (1).

3. Système de transmission d'énergie (11) selon la revendication 1 ou la revendication 2, **caractérisé en ce que** les corps de contact (5) s'étendent transversalement au sens longitudinal (L) de la barre omnibus (1), dans lequel les corps de contact (5) sont plus larges que la barre omnibus (1).

4. Système de transmission d'énergie (11) selon l'une quelconque des revendications 1 à 3, **caractérisé en ce qu'**au moins trois corps de contact (5) sont disposés les uns au-dessus des autres par conducteur de courant.

5. Système de transmission d'énergie (11) selon l'une quelconque des revendications 1 à 4, **caractérisé en ce que** les corps de contact (5) peuvent être déplacés dans une unique direction à l'intérieur de l'unité de contact (4).

6. Système de transmission d'énergie (11) selon l'une quelconque des revendications 1 à 5, **caractérisé en ce que** les corps de contact (5) sont reliés à l'unité de contact (4) par l'intermédiaire de boulons de fixation (7) sur leurs faces arrière (6), dans lequel des éléments à ressort (9) sont disposés entre les faces arrière (6) et une contre-pièce (12) de l'unité de contact (4).

7. Système de transmission d'énergie (11) selon la revendication 6, **caractérisé en ce que** les boulons de fixation (7) sont guidés dans des manchons de guidage (8) de l'unité de contact (4).

8. Système de transmission d'énergie (11) selon la revendication 6 ou la revendication 7, **caractérisé en ce que** chaque corps de contact (5) est soutenu par l'intermédiaire d'au moins deux éléments à ressort (9) sur la contre-pièce (12) de l'unité de contact (4).

9. Système de transmission d'énergie (11) selon l'une quelconque des revendications 6 à 8, **caractérisé en ce que** les boulons de fixation (7) traversent les éléments à ressort (9).
